# EUROPÄISCHE PATENTSCHRIFT

(11) **EP 2 313 191 B1**
(45) Veröffentlichungstag und Bekanntmachung des Hinweises auf die Patenterteilung: **16.05.2012**
(21) Anmeldenummer: 09779567.8
(22) Anmeldetag: 28.05.2009
(51) Int. Cl.: B01J 19/18, B01D 1/22

(54) **VERFAHREN ZUR ENTFERNUNG VON WASSER AUS EINER MISCHUNG**
METHOD FOR REMOVING WATER FROM A MIXTURE
PROCÉDÉ SERVANT À ÉLIMINER DE L'EAU D'UN MÉLANGE

(30) Priorität: 08.07.2008 EP 08104669
(43) Veröffentlichungstag der Anmeldung: 27.04.2011
(73) Patentinhaber: Construction Research & Technology GmbH, 83308 Trostberg (DE)
(72) Erfinder: KLAPDOHR, Simone, 83022 Rosenheim (DE); WALTHER, Burkhard, 84518 Garching (DE); MACK, Helmut, 83278 Traunstein (DE); CAI, Zhizhong, 83308 Trostberg (DE); MARC, Laurent, F-77850 Hericy (FR); MEZGER, Jochen, 67308 Lautersheim (DE); AUSTERMANN, Tobias, 48153 Münster (DE); FLAKUS, Silke, 85560 Ebersberg (DE)
(86) Internationale Anmeldenummer: PCT/EP2009/056511
(87) Internationale Veröffentlichungsnummer: WO 2010/003734

(56) Entgegenhaltungen:
- EP-A- 1 894 955
- WO-A-00/48728
- US-A- 6 060 627
- JACHUCK R J ET AL: "PROCESS INTENSIFICATION: THE OPPORTUNITY PRESENTED BY SPINNING DISC REACTOR TECHNOLOGY" INSTITUTION CHEMICAL ENGINEERS. SYMPOSIUM SERIES, XX, XX, Bd. 141, 1. Januar 1997 (1997-01-01), Seiten 417-424, XP001247804
- BOODHOO K V K ET AL: "PROCESS INTENSIFICATION: SPINNING DISK REACTOR FOR STYRENE POLYMERISATION" APPLIED THERMAL ENGINEERING, PERGAMON, OXFORD, GB, Bd. 20, Nr. 12, 1. Januar 2000 (2000-01-01), Seiten 1127-1146, XP001106801 ISSN: 1359-4311

## Beschreibung

Die vorliegende Erfindung betrifft ein Verfahren zur Entfernung von Wasser aus einer Mischung, welche mindestens eine Verbindung mit mindestens einer gegenüber Isocyanat reaktiven Gruppe und Wasser enthält.

Im Stand der Technik sind eine Vielzahl von Verfahren zur Entfernung von Wasser aus Mischungen bekannt. Der Wassergehalt organischer Verbindungen ist für unzählige chemische Reaktionen von entscheidender Bedeutung, wobei die Anwesenheit von Wasser häufig zu einem höheren Verbrauch an Einsatzstoffen, zu unerwünschten Nebenprodukten oder z.B. bei bestimmten katalytischen Prozessen zu einer vollständigen Blockierung der gewünschten Reaktion führt. So spielt beispielsweise bei der Polyurethan- oder Polyharnstoff-Herstellung der Wassergehalt der Rohstoffe eine wichtige Rolle, da Wasser mit den eingesetzten Isocyanat-Verbindungen reagiert. Dies führt zu unerwünschten Nebenprodukten, die die Produkteigenschaften unvorteilhaft beeinflussen. Das Wasser wird hierbei vor allem über die eingesetzte Polyalkohol- oder Polyamin-Komponente in die Reaktion eingebracht. In der industriellen Praxis ist es bei der Herstellung von Polyurethan- oder Polyharnstoff deshalb üblich, einen dem Wassergehalt entsprechenden Überschuss an Isocyanat einzusetzen. Zur Entfernung des Wassers aus der Polyalkohol- oder Polyamin-Komponente kann aber nach dem Stand der Technik beispielsweise auch eine azeotrope Destillation eingesetzt werden. Diese ist mit den allgemein bekannten Nachteilen, wie lange Be- und Entladungszeiten, schlechte Wärme- und Masseübertragung, schwankende Qualität der Produkte, Reste des Schleppers usw., behaftet. Weiterhin wird die Polyalkohol- oder Polyamin-Komponente einer langen thermischen Belastung ausgesetzt, was je nach verwendetem Substrat zu unerwünschten Nebenprodukten führen kann und somit auch die Qualität des Polyharnstoffs oder des Polyurethans negativ beeinflussen kann.

Aufgabe der vorliegenden Erfindung war es ein prozessual flexibles und wirtschaftliches Verfahren zur Entfernung von Wasser aus Mischungen bereit zu stellen, welche mindestens eine Verbindung mit mindestens einer gegenüber Isocyanat reaktiven Gruppe und Wasser enthalten. Das Verfahren sollte in einfacher Weise durchführbar sein und eine gute und reproduzierbare Produktqualität gewährleisten.

Die Lösung dieser Aufgabe ist ein Verfahren zur Entfernung von Wasser aus einer bevorzugt flüssigen Mischung enthaltend mindestens eine bevorzugt organische Verbindung mit mindestens einer, bevorzugt mindestens zwei gegenüber Isocyanat reaktiven Gruppen und Wasser, wobei man die Mischung auf die Oberfläche eines rotierenden Körpers A aufträgt, wobei die Mischung über die Oberfläche des rotierenden Körpers A zu einem äußeren Bereich der Oberfläche des rotierenden Körpers A fließt und dabei Wasser aus der Mischung verdampft.

Der rotierende Köper A kann scheiben-, vasen-, ring- oder kegelförmig ausgeführt werden, wobei eine waagrechte oder eine von der Waagrechten um bis zu 45°C abweichende Drehscheibe als bevorzugt anzusehen ist. Normalerweise weist der Körper A einen Durchmesser von 0,10 m bis 3,0 m, bevorzugt 0,20 m bis 2,0 m und besonders bevorzugt von 0,20 m bis 1,0 m auf. Die Oberfläche kann glatt sein oder beispielsweise riffel- oder spiralförmige Einformungen aufweisen, welche Einfluss auf die Durchmischung und die Verweilzeit des Reaktionsgemischs ausüben. Zweckmäßigerweise ist der Körper A in einem bezüglich den Bedingungen des erfindungsgemäßen Verfahrens beständigen Container eingebaut.

Die Drehgeschwindigkeit des Körpers A sowie die Dosierungsrate der Mischung sind variabel. Üblicherweise beträgt die Umdrehungsgeschwindigkeit in Umdrehungen pro Minute 1 bis 20000, bevorzugt 100 bis 5000 und besonders bevorzugt 200 bis 2000. Das Volumen des Reaktionsgemischs, welches sich pro Flächeneinheit der Oberfläche auf dem rotierenden Körper A befindet, beträgt typischerweise 0,03 bis 40 mL/dm², bevorzugt 0,1 bis 10 mL/dm², besonders bevorzugt 1,0 bis 5,0 mL/dm². Die mittlere Verweilzeit (Häufigkeitsmittel des Verweilzeitspektrums) der Mischung ist u.a. von der Größe der Oberfläche, von der Art der Verbindung und der enthaltenen Menge an Wasser, von der Temperatur der Oberfläche sowie von der Umdrehungsgeschwindigkeit des rotierenden Körpers A abhängig und beträgt normalerweise zwischen 0,01 und 60 Sekunden, besonders bevorzugt zwischen 0,1 und 10 Sekunden, insbesondere 1 bis 7 Sekunden und ist somit als ausgesprochen kurz anzusehen. Dies gewährleistet, dass das Ausmaß von möglichen Zersetzungsreaktionen und die Bildung unerwünschter Produkte stark reduziert wird und somit die Qualität der Substrate erhalten bleibt.

In einer bevorzugten Ausführungsform der Erfindung wird die Entfernung des Wassers mittels einer Apparatur durchführt, die
α) einen um eine bevorzugt zentral angeordnete Rotationsachse rotierenden Körper A und
β) ein Dosierungssystem,
aufweist.

In einer weiteren Ausführungsform kann die Apparatur eine Quenscheinrichtung aufweisen. Die Quenscheinrichtung liegt bevorzugt als mindestens eine die Drehscheibe umgebende Kühlwand vor, auf die die Mischung nach Verlassen der Oberfläche trifft. In dieser Ausführungsform gewährleistet das erfindungsgemäße Verfahren, dass die Mischung, aus welcher das Wasser entfernt werden soll, durch den Körper A in sehr kurzer Zeit stark erwärmt werden kann, wobei durch das nachfolgende Quenschen thermisch bedingte, unerwünschte Nebenreaktionen verhindert werden. Die abrupte Abkühlung mittels der Quenscheinrichtung erfolgt innerhalb von maximal fünf Sekunden, bevorzugt innerhalb von nur einer Sekunde.

Zu einer effektiven Entfernung des Wassers kann es auch zweckmäßig sein, die Mischung mehrfach über die Oberfläche des rotierenden Körpers A zu leiten. In einer weiteren Ausführungsform der Erfindung erstreckt sich die Oberfläche auf weitere rotierende Körper, so dass die Mischung von der Oberfläche des rotierenden Körpers A auf die Oberfläche mindestens eines weiteren rotierenden Körpers gelangt. Die weiteren rotierenden Körper sind zweckmäßigerweise entsprechend dem Körper A beschaffen. Typischerweise füttert dann Körper A die weiteren Körper mit dem Reaktionsgemisch. Das Reaktionsgemisch verlässt diesen mindestens einen weiteren Körper, und kann dann bei Bedarf abrupt mittels der Quenscheinrichtung abgekühlt werden.

Es ist als bevorzugt anzusehen, dass die Mischung auf der Oberfläche des rotierenden Körpers A in Form eines Films vorliegt, der eine durchschnittliche Dicke zwischen 0,1 µm und 6,0 mm, bevorzugt zwischen 60 und 1000 µm und insbesondere 100 und 500 µm aufweist.

Die Temperatur des rotierenden Körpers A, insbesondere der der Mischung zugewandten Oberfläche, kann in weiten Bereichen variiert werden und hängt sowohl von den eingesetzten Substraten, der Verweilzeit auf dem Körper A als auch vom Druck ab. Es haben sich Temperaturen zwischen 5 und 300 °C, besonders bevorzugt zwischen 25 und 240 °C, insbesondere zwischen 150 und 230 °C als zweckmäßig erwiesen. Die auf den Körper A aufgebrachte Mischung und/oder der rotierende Körper A können beispielsweise elektrisch, mit einer Wärmeträgerflüssigkeit, mit Dampf, mit einem Laser, mit Mikrowellenstrahlung oder mittels Infrarotstrahlung beheizt werden.

Das erfindungsgemäße Verfahren kann bei Normaldruck oder leichtem Überdruck und in einer Atmosphäre von trockenem Schutzgas durchgeführt werden. Es kann aber auch zweckmäßig sein, ein Vakuum zu erzeugen, wobei sich insgesamt Drücke zwischen 0,01 mbar und 1100 mbar, besonders bevorzugt zwischen 1 mbar und 500 mbar, insbesondere zwischen 10 mbar und 400 mbar als vorteilhaft erwiesen haben. Eine bevorzugte Ausführungsform der vorliegenden Erfindung sieht weiterhin vor, dass das verdampfte Wasser mit einem Gas oder trockener Luft, insbesondere Inertgas ausgetrieben wird.

Es hat sich weiterhin als zweckmäßig erwiesen, das verdampfte Wasser an einem Körper mit einer Temperatur zwischen -196 °C und 100 °C, besonders bevorzugt zwischen -78 und 80 °C, insbesondere zwischen -20 und 30 °C zu kondensieren. In diesem Zusammenhang sieht eine bevorzugte Ausführungsform vor, dass der rotierende Körper A von mindestens einer Oberfläche umgeben ist, an welcher Wasser kondensieren kann, wobei es bevorzugt ist, dass die Oberfläche eine Neigung aufweist, so dass das kondensierte Wasser durch Gravitation entlang der Oberfläche von dem rotierenden Körper A weggeführt wird.

Es kann aber auch zweckmäßig sein, die den Körper A umgebenden Oberflächen zu beheizen, um eine Kondensation von Wasser zu verhindern. Der Wasserdampf kann in dieser Ausführungsform durch ein Vakuum oder einen Inertgasstrom abgeführt werden.

Der Wassergehalt der eingesetzten Mischungen ist nicht kritisch. Insbesondere eignet sich das erfindungsgemäße Verfahren, wenn der Wassergehalt in der Mischung direkt vor dem Auftragen auf die Oberfläche des rotierenden Körpers A zwischen 0,001 und 5 Gew.-%, besonders bevorzugt zwischen 0,005 und 1 Gew.-%, insbesondere zwischen 0,01 und 0,5 Gew.-% beträgt, bezogen auf das Gesamtgewicht der Mischung. Es ist hierbei als bevorzugt anzusehen, dass der Wassergehalt in der Mischung nach dem Entfernen des Wassers durch Verdampfen auf der Oberfläche des rotierenden Körpers A zwischen 0,0001 und 1 Gew.-%, besonders bevorzugt zwischen 0,001 und 0,2 Gew.-%, insbesondere zwischen 0,002 und 0,1 Gew.-% beträgt, bezogen auf das Gesamtgewicht der Mischung.

Der Gehalt der Verbindung mit mindestens einer gegenüber Isocyanat reaktiven Gruppe in der Mischung liegt im allgemeinen direkt vor dem Auftragen auf die Oberfläche des rotieren Körpers A zwischen 30 und 99,999 Gew.-%, besonders bevorzugt zwischen 70 und 99,995 Gew.-%, insbesondere zwischen 95 und 99,99 Gew.-%, bezogen auf das Gesamtgewicht der Mischung.

Als Verbindung mit mindestens einer gegenüber Isocyanat reaktiven Gruppe im Sinne der vorliegenden Erfindung sind insbesondere Alkohole und Amine, besonders bevorzugt Polyole und/oder Polyamine geeignet. Diese enthalten eine bis 10, bevorzugt zwei bis 10 und besonders bevorzugt zwei oder drei Hydroxylgruppen und/oder Aminogruppen und besitzen ein zahlenmittleres Molekulargewicht zwischen 32 und 20000, besonders bevorzugt zwischen 90 und 18000 g/mol. Als Polyole eignen sich vorzugsweise die bei 25°C flüssigen, glasartig fest/amorphen oder kristallinen Polyhydroxyverbindungen. Hierbei ist es als bevorzugt anzusehen, dass die bei 25°C nicht flüssigen Polyhydroxyverbindungen vor dem Auftragen auf die Scheibe, insbesondere durch Schmelzen, verflüssigt werden.

Als typische Beispiele wären difunktionelle Polypropylenglykole zu nennen. Es können bevorzugt auch Hydroxylgruppen aufweisende statistische Copolymere und/oder Blockcopolymere des Ethylenoxids und Propylenoxids eingesetzt werden. Geeignete Polyetherpolyole sind die in der Polyurethanchemie an sich bekannten Polyether, wie die unter Verwendung von Startermolekülen hergestellten Polyole aus Styroloxid, Propylenoxid, Butylenoxid, Tetrahydrofuran oder Epichlorhydrin. Konkret eignen sich insbesondere auch Poly(oxytetramethylen)glykol (Poly-THF), 1,2-Polybutylenglykol, oder deren Mischungen. Insbesondere geeignet sind Polypropylenoxid und Polyethylenoxid und deren Mischungen. Es können aber auch alkylierte Polyether wie bespielsweise Methylpolyethylenglykol (MPEG) eingesetzt werden. Ein weiterer als Polyolkomponente einsetzbarer Copolymertyp, der endständig Hydroxylgruppen aufweist, ist gemäß der allgemeinen Formel (herstellbar z.B. mittels " Controlled" High-Speed Anionic Polymerization gemäß Macromolecules 2004, 37, 4038-4043): 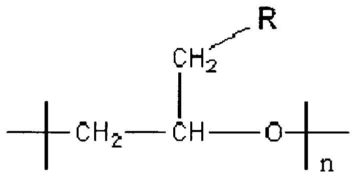 in welcher R gleich oder verschieden ist und bevorzugt durch OMe, OiPr, Cl oder Br repräsentiert wird.

Weiterhin eignen sich als Polyolkomponente insbesondere die bei 25°C flüssigen, glasartig amorphen oder kristallinen Polyesterdi- bzw. polyole, die durch Kondensation von Di- oder Tricarbonsäuren, wie Adipinsäure, Sebacinsäure, Glutarsäure, Azelainsäure, Korksäure, Undecandisäure, Dodecandisäure, 3,3-Dimethylglutarsäure, Terephthalsäure, Isophthalsäure, Hexahydrophthalsäure und/oder Dimerfettsäure, mit niedermolekularen Diolen, Triolen oder Polyolen, wie Ethylenglykol, Propylenglykol, Diethylenglykol, Triethylenglykol, Dipropylenglykol, 1,4-Butandiol, 1,6-Hexandiol, 1,8-Octandiol, 1,10-Decandiol, 1,12-Dodecandiol, Dimerfettalkohol, Glycerin, Pentaerythritol und/ oder Trimethylolpropan, herstellbar sind.

Eine weitere geeignete Gruppe der Polyole sind die Polyester z.B. auf der Basis von Caprolacton, welche auch als "Polycaprolactone" bezeichnet werden. Weitere einsetzbare Polyole sind Polycarbonat-Polyole und Dimerdiole sowie Polyole auf Basis pflanzlicher Öle und ihrer Derivate, wie Rizinusöl und dessen Derivate oder epoxidiertes Sojabohnenöl. Außerdem kommen Hydroxylgruppen aufweisende Polycarbonate in Frage, welche durch Reaktion von Kohlensäurederivaten, z. B. Diphenylcarbonat, Dimethylcarbonat oder Phosgen, mit Diolen erhältlich sind. Besonders eignen sich z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A, Glyzerin, Trimethylolpropan, 1,2,6-Hexantriol, 1,2,4-Butantriol, Trimethylolpropan, Pentaerythrit, Chinit, Mannit, Sorbit, Methylglykosid und 1,3,4,6-Dianhydrohexite. Auch die Hydroxy-funktionellen Polybutadiene, welche u.a. unter dem Handelsnamen" Poly-bd®" käuflich sind, können als Polyole ebenso wie deren hydrierten Analoga eingesetzt,werden. Weiterhin kommen Hydroxy-funktionelle Polysulfide, welche unter dem Handelsnamen" Thiokol® NPS-282" vertrieben werden, sowie Hydroxy-funktionelle Polysiloxane in Frage.

Als erfindungsgemäß einsetzbare Polyamine eignen sich insbesondere Hydrazin, Hydrazinhydrat und substituierte Hydrazine, wie N-Methylhydrazin, N,N'-Dimethylhydrazin, Säurehydrazide, Adipinsäure, Methyladipinsäure, Sebacinsäure, Hydracrylsäure, Terephthalsäure, Semicarbazidoalkylen-hydrazide, wie 13-Semicarbazidopropionsäurehydrazid, Semicarbazidoalkylen-carbazinester, wie z. B. 2-Semicarbazidoethyl-carbazinester und/ oder Aminosemicarbazid-Verbindungen, wie 13-Aminoethylsemicarbazidocarbonat.

Polyamine, z.B. solche, die unter dem Handelsnamen Jeffamine® (es handelt sich um Polyetherpolyamine) vertrieben werden, sind auch geeignet.
Als Polyole und/oder Polyamine kommen auch die als sogenannte Kettenverlänger bekannten Spezies in Frage, welche bei der Herstellung von Polyurethanen und Polyharnstoffen mit überschüssigen Isocyanatgruppen reagieren, normalerweise ein Molekulargewicht (Mₙ) von unter 400 aufweisen und häufig in Form von Polyolen, Aminopolyolen oder aliphatischen, cycloaliphatischen oder araliphatischen Polyaminen vorliegen.

Für die Entfernung von Wasser geeignete Kettenverlängerer sind beispielsweise:
- Alkandiole, wie Ethandiol, 1,2- und 1,3-Propandiol, 1,4- und 2,3-Butandiol, 1,5-Pentandiol, 1,3-Dimethylpropandiol, 1,6-Hexandiol, Neopentylglykol, Cyclohexandimethanol, 2-Methyl-1,3-propandiol,
- Etherdiole, wie Diethylendiglykol, Triethylenglykol oder Hydrochinondihydroxyethylether
- Hydroxybutylhydroxycapronsäureester, Hydroxyhexylhydroxybuttersäureester, Adipinsäurehydroxyethylester und Terephthalsäurebishydroxyethylester und
- Polyamine, wie Ethylendiamin, 1,2- und 1,3-Diaminopropan, 1,4-Diaminobutan, 1,6-Diaminohexan, Isomerengemisch von 2,2,4- und 2,4,4-Trimethylhexamethylendiamin, 2-Methyl-pentamethylendiamin, Diethylentriamin, 1,3- sowie 1,4-Xylylendiamin und 4,4- Diaminodicyclohexylmethan

Schließlich soll erwähnt sein, dass die Polyole und/oder Polyamine Doppelbindungen enthalten können, welche z.B. aus langkettigen, aliphatischen Carbonsäuren oder Fettalkoholen resultieren können. Eine Funktionalisierung mit olefinischen Doppelbindungen ist z. B. auch durch den Einbau vinylischer oder allylischer Gruppen möglich. Diese können beispielsweise von ungesättigten Säuren wie Maleinsäureanhydrid, Acrylsäure oder Methacrylsäure sowie deren jeweiligen Estern stammen.

Es hat sich in diesem Zusammenhang als besonders überraschend erwiesen, dass das erfindungsgemäße Verfahren sich in hervorragender Weise auch für die Entfernung von Wasser aus hochviskosen Flüssigkeiten eignet, wobei auch kleinste Mengen an Wasser effektiv entfernt werden können. Neben der Viskosität spielen auch die chemischen Eigenschaften der zu trocknenden Mischungen eine wichtige Rolle. Insbesondere Polyole und Polyamine lassen sich mit den bekannten Verfahren nach dem Stand der Technik nur mit aufwendigen Maßnahmen trocknen. Das Verfahren gemäß vorliegender Erfindung liefert auch für diese Substanzklassen hervorragende Ergebnisse. Weiterhin ist das erfindungsgemäße Verfahren mit geringem apparativem Aufwand durchführbar, wobei relativ hohe Stoffdurchsätze ermöglicht werden. Somit liefert das beanspruchte Verfahren auch für die großtechnische Umsetzung eine sehr kostengünstige Alternative zu den bereits bekannten Verfahren.

Die nach dem erfindungsgemäßen Verfahren erhaltenen Verfahrensprodukte, eignen sich auch in besonderer Weise für Reaktionen bei denen ein niedriger Wassergehalt eine wichtige Rolle spielt. Beispielsweise können die nach dem erfindungsgemäßen Verfahren erhaltenen Polyole und/oder Polyamine vorteilhaft für die Herstellung von Polyurethanen und Polyharnstoffen eingesetzt werden. Eine besondere Ausführungsform der vorliegenden Erfindung sieht deshalb vor, die Polyole und/oder Polyamine nach dem Verdampfen des Wassers zur Umsetzung mit Isocyanat, bevorzugt Diisocyanat, einzusetzen, wobei die Umsetzung in einem Reaktor durchgeführt wird, welcher aufweist
α) einen um eine Rotationsachse rotierenden heißen Körper B,
β) ein Dosierungssystem und
γ) eine Quenscheinrichtung,
wobei
a) das Polyol und/oder Polyamin und das Isocyanat einzeln und/oder als Mischung, gegebenenfalls mit weiteren Komponenten, mit Hilfe des Dosierungssystems auf die Oberfläche des rotierenden heißen Körpers B aufgetragen werden, so dass ein Film enthaltend Polyol und/oder Polyamin und Isocyanat über die Oberfläche des rotierenden heißen Körpers B zu einem äußeren Bereich der heißen Oberfläche des rotierenden Körpers B fließt,
b) der Film die Oberfläche als Polyurethan enthaltende Reaktionsmischung verlässt und
c) die Reaktionskomposition mittels der Quenscheinrichtung nach Verlassen der heißen Oberfläche abgekühlt wird, besonders bevorzugt die Abkühlung der Reaktionsmischung mindestens 30 °C, besonders bevorzugt mindestens 50°C, insbesondere mindestens 100°C beträgt, und
die Temperatur der Oberfläche des rotierenden Körpers B zwischen 70 bis 300 °C, besonders bevorzugt zwischen 150 und 230 °C beträgt.

Der rotierende heiße Körper B ist hierbei zweckmäßigerweise entsprechend dem Körper A beschaffen. Insbesondere ist es hierbei von Vorteil, dass sowohl die Entfernung des Wassers aus dem Polyol und/oder dem Polyamin als auch die nachfolgende Herstellung der Polyurethane und/oder der Polyharnstoffe mit der gleichen Apparatur durchgeführt werden können.

Das molare Verhältnis der Isocyanatgruppen der eingesetzten Isocyanatkomponente zu der Summe der Aminogruppen und/oder Hydroxylgruppen der eingesetzten Polyole und/oder Amine liegt bevorzugt zwischen 0,1 und 20, besonders bevorzugt zwischen 0,7 und 3, insbesondere zwischen 0,8 und 2,5.

Vorteilhaft wird in dem erfindungsgemäßen Verfahren ein für die Herstellung von Polyurethanen oder Polyharnstoffen geeigneter Katalysator als Komponente der Ausgangsreaktionsmischung eingesetzt. Als Katalysatoren geeignet sind die an sich bekannten, üblichen Katalysatoren der Polyurethanchemie, wie Säuren, z. B. para-Toluolsulfonsäure oder tert. Amine, wie z. B. Triethylamin, Triethylendiamin (DABCO) oder solche welche Atome, wie z.B. Sn, Mn, Fe, Co, Cd, Ni, Cu, Zn, Zr, Ti, Hf, Al, Th, Ce, Bi, Hg, N, P, aufweisen. Das molare Verhältnis Katalysator / Isocyanat ist abhängig vom Typ des Isocyanates und der Art des Katalysators und liegt normalerweise zwischen von 0 bis 0,1, bevorzugt 0 bis 0,03.

Die Temperatur des heißen Körpers B und die Kontaktzeit auf diesem Körper wird bevorzugt so eingestellt, dass bis zum Abkühlen der Reaktionsmischung enthaltend Isocyanat und Polyol mindestens 93 %, besonders bevorzugt mindestens 98 % der maximal mit der eingesetzten Menge an Polyol und gegebenenfalls Amin umsetzbaren Isocyanatgruppen, bevorzugt mit Hydroxyl- und gegebenenfalls Amingruppen des Polyols und gegebenenfalls Amins reagiert haben.

Im Folgenden soll die Erfindung anhand von Ausführungsbeispielen näher beschrieben werden.

### Beispiele

Nachfolgende Patentbeispiele wurden auf einem rotierenden Körper A durchgeführt, welcher als glatte Scheibe ausgeführt ist und aus Kupfer besteht, wobei die Oberfläche verchromt ist. Die Scheibe befindet sich auf einer Achse und ist von einem metallischen Gehäuse umgeben, an dem ein Vakuum angelegt werden kann. Die Scheibe wird von innen mit einem Wärmeträgeröl aufgeheizt.
Vergleichbare Reaktoren werden auch in den Dokumenten WO00/48728, WO00/48729, WO00/48730, WO00/48731 und WO00/48732 näher beschrieben.

### Beispiel 1: Trocknung von Polypropylenglycol 4000 (PPG 4000) mit einem Wassergehalt von 0.50 Gew.% im Vakuum

Es wird PPG 4000 (Acclaim^{®} Polyol 4200, Fa Bayer AG) mit einem Wassergehalt von 0.5 Gew.% (Bestimmung des Wassergehalts durch Karl-Fischer-Titration) eingesetzt. Der Körper A, eine glatte Scheibe mit 20 cm Durchmesser wird hierbei auf 230 °C geheizt und rotiert bei 2000 UpM (UpM = Umdrehungen pro Minute). Bei 200 mbar wird das PPG 4000 mit einer Zahnradpumpe mit 4 ml/s auf die Mitte der Oberfläche der Scheibe dosiert und fließt aufgrund der Zentrifugalkräfte als Film nach außen. Es wird nach Verlassen der Scheibe an der senkrecht dazu stehenden Gehäusewand abgekühlt und aus dem metallischen Gehäuse abgeleitet. Das PPG 4000 verlässt das System mit ca. 100°C und wird in einer Probenflasche gesammelt. Der Restwassergehalt beträgt 0.03%. Damit sind 94% des im PPG 4000 enthaltenen Wassers entfernt worden. Wiederholt man den Vorgang, d. h. dosiert man das bereits einmal behandelte PPG 4000 wieder auf die heiße Scheibe unter den gleichen Bedingungen, erhält man das PPG 4000 mit einem Wassergehalt von 0.01 %.

### Beispiel 2: Trocknung von PPG 4000 mit einem Wassergehalt von 0.12 Gew.% mit Stickstoffstrom

Es wird PPG 4000 (Acclaim^{®} Polyol 4200, Fa Bayer AG) mit einem Wassergehalt von 0.1 Gew.% (Bestimmung des Wassergehaltes durch Karl-Fischer-Titration) eingesetzt. Der Körper A, eine glatte Scheibe mit 20 cm Durchmesser wird hierbei auf 230 °C geheizt und rotiert bei 200 UpM. Das System wird mit Stickstoff durchströmt. Ein- und Auslass befinden sich oberhalb der Scheibe. Das PPG 4000 wird mit einer Zahnradpumpe mit 1 ml/s auf die Mitte der Oberfläche der Scheibe dosiert und fließt aufgrund der Zentrifugalkräfte als Film nach außen. Das PPG 4000 wird nach Verlassen der Scheibe an der senkrecht dazu stehenden Gehäusewand abgekühlt und aus dem metallischen Gehäuse abgeleitet. Das PPG 4000 wird in einer Probenflasche gesammelt. Der Restwassergehalt beträgt 0.03%.

### Beispiel 3: Trocknung von PPG 4000 mit einem Wassergehalt von 0.03 Gew.% mit Stickstoffstrom

PPG 4000 (Acclaim^{®} Polyol 4200, Fa Bayer AG) mit einem Wassergehalt von 0.03 Gew.% (Bestimmung des Wassergehaltes durch Karl-Fischer-Titration) wird auf die Mitte der Oberfläche einer Scheibe gemäß Beispiel 1 aufgetragen, die auf 230°C aufgeheizt wird. Die Scheibe rotiert mit 200 U/min. Das System wird mit Stickstoff durchströmt. Stickstoff-Ein- und Auslass befinden sich oberhalb der Scheibe. Das PPG 4000 wird mit einer Zahnradpumpe mit 2 ml/s auf die Scheibe dosiert und fließt aufgrund der Zentrifugalkräfte als Film nach außen. Es wird nach Verlassen der Scheibe an der senkrecht dazu stehenden Gehäusewand abgekühlt und aus dem metallischen Gehäuse abgeleitet. Das PPG 4000 verlässt das System und wird in einer Probenflasche gesammelt. Der Restwassergehalt beträgt 0.01 Gew.%.

### Beispiel 4: Trocknung von Polypropylenglycol 12000 (PPG 12000) mit einem Wassergehalt von 0.5 Gew.% mit Vakuum

Es wird PPG 12000 (Acclaim^{®} Polyol 12200 N, Fa Bayer AG) mit einem Wassergehalt von 0.5 Gew.% (Bestimmung des Wassergehaltes durch Karl-Fischer-Titration) eingesetzt. Der Körper A, eine glatte Scheibe mit 20 cm Durchmesser wird hierbei auf 230 °C geheizt und rotiert bei 2000 UpM (UpM = Umdrehungen pro Minute). Bei 200 mbar wird das PPG 12000 mit einer Zahnradpumpe mit 4 ml/s auf die Mitte der Oberfläche der Scheibe dosiert und fließt aufgrund der Zentrifugalkräfte als Film nach außen. Es wird nach Verlassen der Scheibe an der senkrecht dazu stehenden Gehäusewand abgekühlt und aus dem metallischen Gehäuse abgeleitet. Das PPG 12000 verlässt das System und wird in einer Probenflasche gesammelt. Der Restwassergehalt beträgt 0.03 Gew.%.

### Vergleichsbeispiel: Trocknung von PPG 4000 mit einem Wassergehalt von 0.06 Gew.% durch Azeotropdestillation mit n-Hexan

PPG 4000 (Acclaim^{®} Polyol 4200, Fa Bayer AG) mit einem Wassergehalt von 0.06 Gew.% (Bestimmung des Wassergehaltes durch Karl-Fischer-Titration) wird in einem Rührkessel mit 2 Gew.% n- Hexan versetzt und das n-Hexan mit dem Wasser durch azeotrope Destillation bei 96°C im Vakuum entfernt. Der Restwassergehalt beträgt nach der Destillation 0.01 Gew.%.

## Patentansprüche

1. Verfahren zur Entfernung von Wasser aus einer Mischung enthaltend mindestens eine Verbindung mit mindestens einer gegenüber Isocyanat reaktiven Gruppe und Wasser, **dadurch gekennzeichnet, dass** man die Mischung auf die Oberfläche eines rotierenden Körpers A aufträgt, wobei die Mischung über die Oberfläche des rotierenden Körpers A zu einem äußeren Bereich der Oberfläche des rotierenden Körpers A fließt und dabei Wasser aus der Mischung verdampft.

2. Verfahren nach Anspruch 1, **dadurch gekennzeichnet, dass** der rotierende Körper A als eine Drehscheibe vorliegt.

3. Verfahren nach Anspruch 1 oder 2, **dadurch gekennzeichnet, dass** man die Entfernung des Wassers mittels einer Apparatur durchführt, die
α) einen um eine Rotationsachse rotierenden Körper A und
β) ein Dosierungssystem,
aufweist.

4. Verfahren nach einem der Ansprüche 1 bis 3, **dadurch gekennzeichnet, dass** die Mischung auf der Oberfläche eines rotierenden Körpers A in Form eines Films vorliegt, der eine durchschnittliche Dicke zwischen 0,1 µm und 6,0 mm aufweist.

5. Verfahren nach einem der Ansprüche 1 bis 4, **dadurch gekennzeichnet, dass** die durchschnittliche Verweilzeit der Inhaltsstoffe der Mischung auf der Oberfläche des rotierenden Körpers A zwischen 0,01 und 60 Sekunden beträgt.

6. Verfahren nach einem der Ansprüche 1 bis 5, **dadurch gekennzeichnet, dass** die Temperatur des rotierenden Körpers A zwischen 5 und 300 °C beträgt.

7. Verfahren nach einem der Ansprüche 1 bis 6, **dadurch gekennzeichnet, dass** der Druck, bei dem das Wasser entfernt wird, zwischen 0,01 mbar und 1100 mbar beträgt.

8. Verfahren nach einem der Ansprüche 1 bis 7, **dadurch gekennzeichnet, dass** man das verdampfte Wasser an einem Körper mit einer Temperatur zwischen - 196 °C und 100 °C kondensiert.

9. Verfahren nach einem der Ansprüche 1 bis 8, **dadurch gekennzeichnet, dass** das verdampfte Wasser mit einem Gas oder trockener Luft, insbesondere Inertgas ausgetrieben wird.

10. Verfahren nach einem der Ansprüche 1 bis 9, **dadurch gekennzeichnet, dass** der Wassergehalt in der Mischung direkt vor dem Auftragen auf die Oberfläche des rotierenden Körpers A zwischen 5 und 0,001 Gew.-% beträgt, bezogen auf das Gesamtgewicht der Mischung.

11. Verfahren nach einem der Ansprüche 1 bis 10, **dadurch gekennzeichnet, dass** der Wassergehalt in der Mischung nach dem Entfernen des Wassers durch Verdampfen auf der Oberfläche des rotierenden Körpers A zwischen 0,0001 und 1 Gew.-% beträgt, bezogen auf das Gesamtgewicht der Mischung.

12. Verfahren nach einem der Ansprüche 1 bis 11, **dadurch gekennzeichnet, dass** der Gehalt an der Verbindung mit mindestens einer gegenüber Isocyanat reaktiven Gruppe in der Mischung direkt vor dem Auftragen auf die Oberfläche des rotieren Körpers A zwischen 30 und 99,999 Gew.-% beträgt, bezogen auf das Gesamtgewicht der Mischung.

13. Verfahren nach einem der Ansprüche 1 bis 12, **dadurch gekennzeichnet, dass** es sich bei der Verbindung mit mindestens einer gegenüber Isocyanat reaktiven Gruppe um Alkohole und/oder Amine handelt.

14. Verfahren nach einem der Ansprüche 1 bis 13, **dadurch gekennzeichnet, dass** man die Mischung, enthaltend Polyole und/oder Polyamine, nach dem Verdampfen des Wassers zur Umsetzung mit Isocyanat einsetzt, wobei die Umsetzung in einem Reaktor durchgeführt wird, welcher aufweist
α) einen um eine Rotationsachse rotierenden heißen Körper B,
β) ein Dosierungssystem und
γ) eine Quenscheinrichtung,
wobei
a) das Polyol und/oder Polyamin und das Isocyanat einzeln und/oder als Mischung, gegebenenfalls mit weiteren Komponenten, mit Hilfe des Dosierungssystems auf die Oberfläche des rotierenden heißen Körpers B aufgetragen werden, so dass ein Film enthaltend Polyol und/oder Polyamin und Isocyanat über die Oberfläche des rotierenden heißen Körpers B zu einem äußeren Bereich der heißen Oberfläche des rotierenden Körpers B fließt,
b) der Film die Oberfläche als Polyurethan enthaltende Reaktionsmischung verlässt und
c) die Reaktionskomposition mittels der Quenscheinrichtung nach Verlassen der heißen Oberfläche abgekühlt wird, besonders bevorzugt die Abkühlung der Reaktionsmischung mindestens 30 °C beträgt, und
die Temperatur der Oberfläche des rotierenden Körpers B zwischen 70 bis 300 °C beträgt.

## Claims

1. Method for removing water from a mixture containing at least one compound having at least one group reactive towards isocyanate and containing water, **characterized in that** in the mixture is applied to the surface of a rotating body A, the mixture flowing over the surface of the rotating body A to an outer region of the surface of the rotating body A and water evaporating from the mixture in the process.

2. Method according to Claim 1, **characterized in that** the rotating body A is present as a rotating disc.

3. Method according to Claim 1 or 2, **characterized in that** the removal of the water is carried out by means of an apparatus which has
α) a body A rotating about an axis of rotation and
β) a metering system.

4. Method according to any of Claims 1 to 3, **characterized in that** the mixture is present on the surface of a rotating body A in the form of a film which has an average thickness between 0.1 µm and 6.0 mm.

5. Method according to any of Claims 1 to 4, **characterized in that** the average residence time of the ingredients of the mixture on the surface of the rotating body A is between 0.01 and 60 seconds.

6. Method according to any of Claims 1 to 5, **characterized in that** the temperature of the rotating body A is between 5 and 300°C.

7. Method according to any of Claims 1 to 6, **characterized in that** the pressure at which the water is removed is between 0.01 mbar and 1100 mbar.

8. Method according to any of Claims 1 to 7, **characterized in that** the evaporated water condenses on a body having a temperature between -196°C and 100°C.

9. Method according to any of Claims 1 to 8, **characterized in that** the evaporated water is expelled with a gas or dry air, in particular inert gas.

10. Method according to any of Claims 1 to 9, **characterized in that** the water content in the mixture directly before application to the surface of the rotating body A is between 5 and 0.001% by weight, based on the total weight of the mixture.

11. Method according to any of Claims 1 to 10, **characterized in that** the water content of the mixture after removal of the water by evaporation on the surface of the rotating body A is between 0.0001 and 1% by weight, based on the total weight of the mixture.

12. Method according to any of Claims 1 to 11, **characterized in that** the content of the compound having at least one group reactive towards isocyanate in the mixture directly before application to the surface of the rotating body A is between 30 and 99.999% by weight, based on the total weight of the mixture.

13. Method according to any of Claims 1 to 12, **characterized in that** the compound having at least one group reactive towards isocyanate comprises alcohols and/or amines.

14. Method according to any of Claims 1 to 13, **characterized in that** the mixture containing polyols and/or polyamines is used for reaction with isocyanate after evaporation of the water, the reaction being carried out in a reactor which has
α) a hot body B rotating about an axis of rotation,
β) a metering system and
γ) a quench device,
a) the polyol and/or polyamine and the isocyanate being applied individually and/or as a mixture, optionally with further components, with the aid of the metering system to the surface of the rotating hot body B so that a film containing polyol and/or polyamine and isocyanate flows over the surface of the rotating hot body B to an outer region of the hot surface of the rotating body B,
b) the film leaving surface as a polyurethane-containing reaction mixture and
c) the reaction composition being cooled by means of the quench device after leaving the hot surface, particularly the cooling of the reaction mixture being at least 30°C, and
the temperature of the surface of the rotating body B being between 70 and 300°C.

## Revendications

1. Procédé d'élimination de l'eau d'un mélange contenant au moins un composé contenant au moins un groupe réactif avec les isocyanates et de l'eau, **caractérisé en ce que** le mélange est appliqué sur la surface d'un corps rotatif A, le mélange s'écoulant sur la surface du corps rotatif A vers une zone extérieure de la surface du corps rotatif A et l'eau s'évaporant ainsi du mélange.

2. Procédé selon la revendication 1, **caractérisé en ce que** le corps rotatif A se présente sous la forme d'un disque rotatif.

3. Procédé selon la revendication 1 ou 2, **caractérisé en ce que** l'élimination de l'eau est réalisée par un appareil qui comprend :
α) un corps A rotatif autour d'un axe de rotation et
β) un système d'alimentation.

4. Procédé selon l'une quelconque des revendications 1 à 3, **caractérisé en ce que** le mélange se présente sur la surface d'un corps rotatif A sous la forme d'un film qui présente une épaisseur moyenne comprise entre 0,1 µm et 6,0 mm.

5. Procédé selon l'une quelconque des revendications 1 à 4, **caractérisé en ce que** le temps de séjour moyen des constituants du mélange sur la surface du corps rotatif A est compris entre 0,01 et 60 secondes.

6. Procédé selon l'une quelconque des revendications 1 à 5, **caractérisé en ce que** la température du corps rotatif A est comprise entre 5 et 300 °C.

7. Procédé selon l'une quelconque des revendications 1 à 6, **caractérisé en ce que** la pression à laquelle l'eau est éliminée est comprise entre 0,01 mbar et 1 100 mbar.

8. Procédé selon l'une quelconque des revendications 1 à 7, **caractérisé en ce que** l'eau évaporée se condense sur un corps à une température comprise entre 196 °C et 100 °C.

9. Procédé selon l'une quelconque des revendications 1 à 8, **caractérisé en ce que** l'eau évaporée est expulsée avec un gaz ou de l'air sec, notamment un gaz inerte.

10. Procédé selon l'une quelconque des revendications 1 à 9, **caractérisé en ce que** la teneur en eau du mélange directement avant l'application sur la surface du corps rotatif A est comprise entre 5 et 0,001 % en poids, par rapport au poids total du mélange.

11. Procédé selon l'une quelconque des revendications 1 à 10, **caractérisé en ce que** la teneur en eau du mélange après l'élimination de l'eau par évaporation sur la surface du corps rotatif A est comprise entre 0,0001 et 1 % en poids, par rapport au poids total du mélange.

12. Procédé selon l'une quelconque des revendications 1 à 11, **caractérisé en ce que** la teneur en composé contenant au moins un groupe réactif avec les isocyanates du mélange directement avant l'application sur la surface du corps rotatif A est comprise entre 30 et 99,999 % en poids, par rapport au poids total du mélange.

13. Procédé selon l'une quelconque des revendications 1 à 12, **caractérisé en ce que** le composé contenant au moins un groupe réactif avec les isocyanates consiste en des alcools et/ou amines.

14. Procédé selon l'une quelconque des revendications 1 à 13, **caractérisé en ce que** le mélange contenant des polyols et/ou des polyamines est utilisé après l'évaporation de l'eau pour la réaction avec un isocyanate, la réaction étant réalisée dans un réacteur qui comprend
α) un corps chaud B rotatif autour d'un axe de rotation,
β) un système d'alimentation et
γ) un dispositif de trempe,
a) le polyol et/ou la polyamine et l'isocyanate individuellement et/ou en mélange, éventuellement avec des composants supplémentaires, étant appliqués à l'aide du système d'alimentation sur la surface du corps rotatif chaud B, de manière à ce qu'un film contenant le polyol et/ou la polyamine et l'isocyanate s'écoule sur la surface du corps rotatif chaud B vers une zone extérieure de la surface chaude du corps rotatif B,
b) le film quittant la surface sous la forme d'un mélange réactionnel contenant du polyuréthane, et
c) la composition réactionnelle étant refroidie par le dispositif de trempe après avoir quitté la surface chaude, le refroidissement du mélange réactionnel étant de manière particulièrement préférée d'au moins 30 °C, et
la température de la surface du corps rotatif B étant comprise entre 70 et 300 °C.
